(19) **Europäisches Patentamt / European Patent Office / Office européen des brevets**

(11) **EP 3 793 143 B1**

(12) **FASCICULE DE BREVET EUROPEEN**

(45) Date de publication et mention
de la délivrance du brevet:
**11.05.2022 Bulletin 2022/19**

(21) Numéro de dépôt: **20195326.2**

(22) Date de dépôt: **09.09.2020**

(51) Classification Internationale des Brevets (IPC):
**H04L 45/00** *(2022.01)* **H04L 47/32** *(2022.01)*

(52) Classification Coopérative des Brevets (CPC):
**H04L 45/26; H04L 47/32**

(54) **PROCÉDÉ DE RELAIS D'UNE REQUÊTE DE DÉCOUVERTE DE ROUTE DANS UN RÉSEAU DE COMMUNICATION MAILLÉ**

VERFAHREN ZUR WEITERLEITUNG EINER WEG-ERMITTLUNGSANFRAGE IN EINEM MASCHEN-KOMMUNIKATIONSNETZ

METHOD FOR RELAY OF A ROUTE DISCOVERY REQUEST IN A MESH COMMUNICATION NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.09.2019 FR 1909999**

(43) Date de publication de la demande:
**17.03.2021 Bulletin 2021/11**

(73) Titulaire: **Sagemcom Energy & Telecom SAS 92500 Rueil-Malmaison (FR)**

(72) Inventeur: **ROTER, Ziv 92500 RUEIL MALMAISON (FR)**

(74) Mandataire: **Cabinet Le Guen Maillet 3, impasse de la Vigie CS 71840 35418 Saint-Malo Cedex (FR)**

(56) Documents cités:
**US-A1- 2015 271 062**

- **NIU JIANWEI ET AL: "R3E: Reliable Reactive Routing Enhancement for Wireless Sensor Networks", IEEE TRANSACTIONS ON INDUSTRIAL INFORMATICS, IEEE SERVICE CENTER, NEW YORK, NY, US, vol. 10, no. 1, 28 février 2014 (2014-02-28), pages 784-794, XP011534025, ISSN: 1551-3203, DOI: 10.1109/TII.2013.2261082 [extrait le 2013-12-12]**
- **LEI TANG ET AL: "Optimizations for route discovery in asynchronous duty-cycling wireless networks", MOBILE ADHOC AND SENSOR SYSTEMS (MASS), 2012 IEEE 9TH INTERNATIONAL CONFERENCE ON, IEEE, 8 octobre 2012 (2012-10-08), pages 155-163, XP032375659, DOI: 10.1109/MASS.2012.6502513 ISBN: 978-1-4673-2433-5**

**Description**

DOMAINE TECHNIQUE

La présente invention concerne le relais de copies de requête de découverte de route afin de découvrir au moins une route depuis un dispositif nœud source jusqu'à un dispositif nœud destination dans un réseau de communication maillé comportant d'autres dispositifs nœuds pouvant agir comme relais entre le dispositif nœud source et le dispositif nœud destination.

ETAT DE LA TECHNIQUE ANTERIEURE

Pour découvrir une route appropriée dans un réseau de communication maillé depuis un dispositif nœud source jusqu'à un dispositif nœud destination, il est connu que le dispositif nœud source diffuse (« broadcast » en anglais) une requête de découverte de route. Cette requête de découverte de route est reçue par chaque dispositif nœud dans le voisinage réseau dudit dispositif nœud source, et qui relaie, par diffusion, ladite copie de la requête si ledit dispositif nœud en question n'est pas le dispositif nœud destination. Par diffusion de proche en proche, plusieurs copies de la requête de découverte de route sont typiquement reçues par le dispositif nœud destination, chacune de ces copies ayant suivi une route différente dans le réseau de communication maillé. Chaque dispositif nœud peut toutefois décider de ne pas relayer une copie de la requête de découverte de route, lorsqu'un ou plusieurs critères ne sont pas remplis. Notamment, avant de décider de relayer ladite copie de la requête, le dispositif nœud en question vérifie typiquement si ladite copie de la requête comporte une information représentative d'un coût de route, depuis le dispositif nœud source jusqu'audit dispositif nœud en question, qui est meilleur que le coût de route représenté par une information contenue dans une autre copie de ladite requête de découverte de route précédemment reçue par ledit dispositif nœud en question. En d'autres termes, le dispositif nœud en question relaie, par diffusion, ladite copie de la requête si ladite copie concerne une route qui a suivi, depuis le dispositif nœud source jusqu'audit dispositif nœud en question, un trajet de plus faible coût que toute autre copie de ladite requête précédemment reçue par ledit dispositif nœud en question (donc pour la même découverte de route). Lorsque ledit dispositif nœud en question décide de relayer, par diffusion, ladite copie de la requête, ledit dispositif nœud en question met à jour l'information de coût de route contenue dans ladite copie de la requête, de manière à prendre en compte que ladite copie de la requête est passée par ledit dispositif nœud en question. Ainsi, selon un tel mécanisme de découverte de route, plusieurs copies de la requête de découverte de route parviennent typiquement au dispositif nœud destination, chacune comportant une information de coût de route que ladite copie a suivi pour être propagée depuis ledit dispositif nœud source jusqu'audit dispositif nœud destination. Le trajet emprunté par la copie de ladite requête de découverte de route associée au meilleur coût de route est ensuite sélectionné pour permettre au dispositif nœud source de transmettre des données au dispositif nœud destination.

Ce mécanisme de découverte de route se retrouve dans des réseaux de communication maillés où des dispositifs nœudsagissent comme relais pour permettre d'étendre la portée des communications. C'est notamment le cas dans certaines technologies de réseaux d'alimentation électrique de type AMM (« Automated Meter Management » en anglais) qui s'appuient sur des communications par courants porteurs en ligne PLC (« PowerLine Communications » en anglais) pour collecter, auprès de compteurs électriques intelligents (« smart electricity meters » en anglais), des données de relevés de consommation énergétique d'installations électriques que lesdits compteurs électriques intelligents sont respectivement en charge de surveiller. C'est notamment le cas dans le cadre de la technologie G3-PLC (marque déposée). Ce mécanisme de découverte de route s'applique aussi dans d'autres types de réseaux de communication maillés, qu'ils soient filaires (« wired » en anglais) ou sans-fil (« wireless » en anglais) dès qu'ils présentent un maillage impliquant qu'il existe plusieurs routes possibles pour permettre à deux dispositifs nœuds de communiquer.

Ce mécanisme de découverte de route est typiquement associé à un mécanisme d'évitement de collision (« collision avoidance » en anglais), plus particulièrement de type CSMA/CA (« Carrier Sense Multiple Access with Collision Avoidance » en anglais). Ce mécanisme d'évitement de collision introduit un délai d'attente aléatoire avant de tenter d'accéder au médium de communication, ce qui évite que plusieurs dispositifs nœuds ne tentent de relayer en même temps une requête de découverte de route qu'ils auraient reçue substantiellement au même moment. Ce délai d'attente aléatoire implique donc un ordre aléatoire de transmission de deux messages en attente au sein d'un dispositif nœud. Deux phénomènes peuvent alors se produire. Premièrement, si le réseau de communication maillé est dense, le médium peut être suffisamment occupé pour que certaines transmissions, et donc certains relais de messages tels que des requêtes de découverte de route, soient abandonnées. Cela se produit si le médium est occupé pendant un nombre prédéfini (paramètre macMaxFrameRetries dans les spécifications G3-PLC) de tentatives de prise du médium de communication. En effet, le mécanisme d'évitement de collision vérifie, avant toute émission, si le médium n'est pas déjà occupé, et retarde l'émission si tel est le cas. Si le médium est particulièrement chargé, une émission peut être retardée indéfiniment. Il y a donc un risque de ne pas envisager le routage via les dispositifs nœuds les plus optimaux, du fait d'une perte aléatoire d'une ou plusieurs requêtes de découverte de route. Deuxièmement, si l'ordre aléatoire fait retransmettre en premier une requête de découverte de route via un premier chemin puis une autre requête de découverte de route, pour le même couple de dispositif nœud source et de dispositif nœud destination, via un second chemin de meilleure qualité, un dispositif nœud suivant sur la route peut ainsi prendre la décision de retransmettre la demande de route deux fois de suite, ce qui augmente en aval la charge de diffusion associée.

Il est connu le document US 2015/271062 A1 qui divulgue un procédé pour relayer une requête de découverte de route afin de découvrir au moins une route depuis un dispositif nœud source jusqu'à un dispositif nœud destination dans un réseau de communication maillé comportant en outre d'autres dispositifs nœuds pouvant agir comme relais entre le dispositif nœud source et le dispositif nœud destination. Un délai d'attente est appliqué à la requête de découverte de route avant de décider de la relayer, le délai d'attente étant déterminé en fonction du niveau de la qualité du lien par lequel la requête de découverte de route à relayer a été reçue.

Il est alors souhaitable de pallier ces inconvénients de l'état de la technique. Il est notamment souhaitable de fournir une solution qui permette de réduire le temps nécessaire pour découvrir une route optimale dans un tel réseau de communication maillé. Il est notamment souhaitable de fournir une solution qui permette de réduire la charge de diffusion, et donc la consommation de bande passante, lors de la découverte de routes dans un tel réseau de communication maillé.

EXPOSE DE L'INVENTION

Un objet de la présente invention est de proposer un procédé pour relayer une requête de découverte de route afin de découvrir au moins une route depuis un dispositif nœud source jusqu'à un dispositif nœud destination dans un réseau de communication maillé comportant en outre d'autres dispositifs nœuds pouvant agir comme relais entre le dispositif nœud source et le dispositif nœud destination, le procédé étant implémenté par au moins un dispositif nœud parmi lesdits autres dispositifs nœuds et comportant les étapes suivantes : recevoir la requête de découverte de route à relayer, la requête de découverte de route étant reçue via un lien présentant un niveau de qualité de lien ; déterminer un délai d'attente à appliquer avant de relayer la requête de découverte de route ; appliquer le délai d'attente à la requête de découverte de route ; et relayer la requête de découverte de route après expiration du délai d'attente. Le délai d'attente est déterminé de la façon suivante : lorsque le niveau de qualité de lien est inférieur ou égal à un premier seuil prédéfini, le délai d'attente est égal à une première valeur par défaut ; lorsque le niveau de qualité de lien est supérieur ou égal à un second seuil prédéfini, le délai d'attente est égal à une seconde valeur par défaut, la seconde valeur par défaut étant inférieure ou égale à la première valeur par défaut, le second seuil prédéfini étant strictement supérieur au premier seuil prédéfini ; et lorsque le niveau de qualité de lien est compris dans l'intervalle entre le premier seuil prédéfini et le second seuil prédéfini, le délai d'attente est inférieur à la première valeur par défaut, et pour au moins une partie de l'intervalle entre le premier seuil prédéfini et le second seuil prédéfini, le délai d'attente est aussi inférieur à la seconde valeur par défaut. Ainsi, en définissant le délai d'attente de ma manière exposée ci-dessus, la priorité est donnée à des relais de requêtes de découverte de route qui proviennent de liens de qualité « moyenne » (ni trop faible, ni trop forte). Cela permet de traiter en priorité des routes qui ne contiennent pas de liens qui peuvent manquer à terme de fiabilité et qui limitent le nombre de sauts (« hops » en anglais) nécessaires. Le temps de découverte d'une route optimale est ainsi réduit, ainsi que la charge de diffusion, et donc la consommation de bande passante.

Selon un mode de réalisation particulier, le niveau de qualité de lien est un indicateur de qualité de lien LQI.

Selon un mode de réalisation particulier, lorsque le niveau de qualité de lien est égal à une valeur prédéfinie, appelée valeur optimale, entre le premier seuil prédéfini et second seuil prédéfini, le délai d'attente est minimal.

Selon un mode de réalisation particulier, le délai d'attente minimal est nul.

Selon un mode de réalisation particulier, le délai d'attente évolue de manière linéaire entre le premier seuil prédéfini et la valeur optimale.

Selon un mode de réalisation particulier, le délai d'attente évolue de manière linéaire entre la valeur optimale et le second seuil prédéfini.

Selon un mode de réalisation particulier :

- entre le premier seuil prédéfini et la valeur optimale de qualité de lien LQI

$$\frac{(\mathrm{adpLowLQIValue+adpHighLQIValue})}{2}$$, le délai d'attente applicable D est défini comme suit

$$D = LQI \times 2 \times \frac{adpDelayLowLQI}{adpLowLQIValue - adpHighLQIValue} +$$

$$adpDelayLowLQI \times \frac{\frac{adpLowLQIValue + adpHighLQIValue}{adpHighLQIValue - adpLowLQIValue}}{\frac{(adpLowLQIValue+adpHighLQIValue)}{2}}$$

- et entre la valeur optimale de qualité de lien LQI et le second seuil prédéfini, le délai d'attente applicable D est défini comme suit

$$D = LQI \times 2 \times \frac{adpDelayHighLQI}{adpHighLQIValue - adpLowLQIValue} +$$

$$adpDelayHighLQI \times \frac{adpLowLQIValue + adpHighLQIValue}{adpLowLQIValue - adpHighLQIValue}$$

où adpLowLQIValue représente le premier seuil prédéfini, adpHighLQIValue représente le second seuil prédéfini, adpLowLQIValue représente la première valeur par défaut et adpHighLQIValue représente la seconde valeur par défaut, et où le niveau de qualité de lien est un indicateur de qualité de lien LQI.

Selon un mode de réalisation particulier, la requête de découverte de route inclut une information indiquant si le chemin parcouru jusqu'alors par ladite requête de découverte de route inclut un ou plusieurs liens jugés non fiables, le procédé comporte en outre les étapes suivantes : comparer le niveau de qualité de lien avec un troisième seuil, et en conséquence, mettre au besoin à jour l'information indiquant si le chemin parcouru jusqu'alors par ladite requête de découverte de route inclut un ou plusieurs liens jugés non fiables ; et lorsque ledit chemin inclut un ou plusieurs liens jugés non fiables, augmenter le délai d'attente par un délai d'attente supplémentaire prédéfini.

Selon un mode de réalisation particulier, lorsqu'une autre requête de découverte de route est reçue avec les mêmes dispositif nœud source et dispositif nœud destination durant le délai d'attente appliqué à la requête de découverte de route à relayer et lorsqu'en outre cette autre requête de découverte de route présente un meilleur coût de route, le procédé comporte l'étape suivante : remplacer en file d'attente la requête de découverte de route déjà en attente par ladite autre requête de découverte de route.

Selon un mode de réalisation particulier, cette autre requête de découverte de route est mise en attente pour le temps restant du délai d'attente qui était appliqué à la requête de découverte de route précédemment présente en file d'attente.

Un autre objet de la présente invention est de proposer un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus, lorsque ledit programme est exécuté par le processeur. L'invention concerne également un support de stockage d'informations stockant un tel programme d'ordinateur.

Un autre objet de la présente invention est de proposer un procédé de relais de requêtes de découverte de route dans un réseau de communication maillé comportant en outre des dispositifs nœuds, chaque dispositif nœud implémentant le procédé mentionné ci-dessus.

Un autre objet de la présente invention est de proposer un dispositif nœud, appelé dispositif nœud intermédiaire, configuré pour relayer une requête de découverte de route afin de découvrir au moins une route depuis un dispositif nœud source jusqu'à un dispositif nœud destination dans un réseau de communication maillé dans lequel le dispositif nœud intermédiaire est destiné à être utilisé, le dispositif nœud comportant : des moyens pour recevoir la requête de découverte de route à relayer, la requête de découverte de route étant reçue via un lien présentant un niveau de qualité de lien ; des moyens pour déterminer un délai d'attente à appliquer avant de relayer la requête de découverte de route ; des moyens pour appliquer le délai d'attente à la requête de découverte de route ; et des moyens pour relayer la requête de découverte de route après expiration du délai d'attente. Le dispositif nœud intermédiaire est configuré de telle sorte que le délai d'attente est déterminé de la façon suivante : lorsque le niveau de qualité de lien est inférieur ou égal à un premier seuil prédéfini, le délai d'attente est égal à une première valeur par défaut ; lorsque le niveau de qualité de lien

est supérieur ou égal à un second seuil prédéfini, le délai d'attente est égal à une seconde valeur par défaut, la seconde valeur par défaut étant inférieure ou égale à la première valeur par défaut , le second seuil prédéfini étant strictement supérieur au premier seuil prédéfini ; et lorsque le niveau de qualité de lien est compris dans l'intervalle entre le premier seuil prédéfini et le second seuil prédéfini, le délai d'attente est inférieur à la première valeur par défaut, et pour au moins une partie de l'intervalle entre le premier seuil prédéfini et le second seuil prédéfini, le délai d'attente est aussi inférieur à la seconde valeur par défaut.

Un autre objet de la présente invention est de proposer un compteur électrique intelligent incluant le dispositif nœud intermédiaire mentionné ci-dessus.

Un autre objet de la présente invention est de proposer un réseau de communication maillé comportant une pluralité de dispositifs nœuds conformes au dispositif nœud intermédiaire tel que mentionné ci-dessus.

Un autre objet de la présente invention est de proposer un réseau de communication maillé implémenté sur un réseau d'alimentation électrique, où le réseau de communication maillé est un réseau de communication par courants porteurs en ligne comportant une pluralité de compteurs électriques intelligents tels que mentionnés ci-dessus.

BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :

[Fig. 1] illustre schématiquement un réseau de communication maillé dans lequel la présente invention peut être implémentée ;
[Fig. 2] illustre schématiquement un graphique d'évolution d'un délai d'attente avant relais d'une requête de découverte de route, en fonction d'un indicateur de qualité de lien ;
[Fig. 3] illustre schématiquement un exemple d'architecture matérielle d'un dispositif nœud du réseau de communication maillé de la Fig. 1 ; et
[Fig. 4] illustre schématiquement un algorithme de relais de requête de découverte de route.

EXPOSE DETAILLE DE MODES DE REALISATION

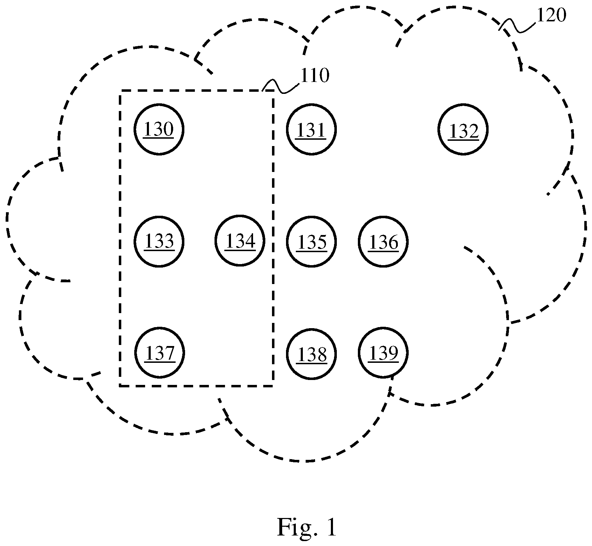

La **Fig. 1** illustre schématiquement un réseau de communication maillé 120 dans lequel la présente invention peut être implémentée. Le réseau de communication maillé 120 comporte une pluralité de dispositifs nœuds (nœuds de communication) 130 à 139.

A chaque dispositif nœud du réseau de communication 120 est associé un voisinage réseau. Sur la Fig. 1, le dispositif nœud 133 est associé à un voisinage réseau 110 englobant les dispositifs nœuds 130, 134 et 137. En effet, dans le réseau de communication maillé 120, un signal ou un message transmis par un dispositif nœud (tel que le dispositif nœud 133) n'est en général pas directement visible en tout point dudit réseau de communication maillé. Chaque dispositif nœud émetteur de signaux ou de messages dispose alors d'un voisinage réseau, c'est-à-dire d'un sous-ensemble dudit réseau de communication 120 dans lequel tout dispositif nœud peut recevoir de manière intelligible lesdits signaux ou messages directement en provenance du dispositif nœud les ayant transmis. Le voisinage réseau correspond à la portée des signaux émis, en fonction de paramètres prédéterminés de transmission (e.g. puissance, schéma de modulation et de codage, topologie réseau...) du dispositif nœud à la source desdits signaux et aussi potentiellement en fonction de caractéristiques du canal de communication (atténuation, bruit, impédance...).

De manière à augmenter la portée des communications dans le réseau de communication maillé 120, des dispositifs nœuds jouent le rôle de relais pour permettre d'établir des communications depuis un dispositif nœud source (par exemple le dispositif nœud 133) vers un dispositif nœud destination (par exemple le dispositif nœud 136) qui ne fait pas partie du voisinage réseau dudit dispositif source. Certaines communications entre dispositifs nœuds peuvent nécessiter plusieurs relais successifs. De manière à permettre d'établir des communications depuis le dispositif nœud source vers le dispositif nœud destination, il est nécessaire de découvrir quelle route, au sein du réseau de communication maillé 120, doivent emprunter les données concernées pour parvenir jusqu'au dispositif nœud destination. Pour ce faire, le dispositif nœud source diffuse une requête de découverte de route. Une copie de cette requête de découverte de route est reçue par au moins un dispositif nœud dans le voisinage réseau dudit dispositif nœud source, et qui relaie, par diffusion, ladite copie de la requête si ledit dispositif nœud n'est pas le dispositif nœud destination. Cette copie relayée est alors reçue par au moins un autre dispositif nœud dans le voisinage réseau dudit dispositif nœud ayant effectué le relais, cet autre dispositif nœud pouvant alors relayer ladite copie à son tour si ledit autre dispositif nœud n'est pas non plus le dispositif nœud destination. Par diffusion de proche en proche, plusieurs copies de la requête de découverte de route sont typiquement reçues par le dispositif nœud destination, chacune de ces copies ayant suivi une route différente dans le réseau de communication maillé 120. Etant donné que chacune de ces copies a suivi une route différente, chacune de ces copies est associée à un coût de route qui lui est propre. La route suivie par la copie présentant le meilleur coût de route est alors sélectionnée pour transmettre des données depuis le dispositif nœud source jusqu'au dispositif nœud destination.

Selon un premier exemple, le coût de route est un nombre de sauts (« hops » en anglais) subis par la copie en question depuis le dispositif nœud source jusqu'au dispositif nœud destination. Selon un second exemple, le coût de route est le résultat d'un calcul qui dépend de la bande passante des liens franchis, par la copie en question depuis le dispositif nœud source jusqu'au dispositif nœud destination. D'autres métriques peuvent être utilisées pour établir un coût de route, c'est-à-dire un coût de transit, depuis le dispositif nœud source jusqu'au dispositif nœud destination.

Lorsqu'un dispositif nœud reçoit une requête de découverte de route, ledit dispositif nœud vérifie si ladite requête de découverte de route doit être relayée par ledit dispositif nœud selon au moins des critères relatifs au coût de route associé à ladite requête de découverte de route et du coût de route d'au moins une requête de découverte de route éventuellement précédemment reçue pour le même couple source-destination. D'autres critères que les critères de coût de route peuvent être appliqués. Par exemple, les critères en question sont ceux énoncés dans la table 9-37 de la clause D.11.2 des spécifications G3-PLC.

De manière préférentielle, le réseau de communication maillé 120 est plus particulièrement un réseau de communication par courants porteurs en ligne (« powerline communications (PLC) network » en anglais), qui est implémenté sur un réseau d'alimentation électrique. Les dispositifs nœuds du réseau de communication maillé 120 sont alors des compteurs électriques intelligents, permettant de collecter à distance des données de relevés de consommation énergétique d'installations électriques (alimentées par ledit réseau d'alimentation électrique) dont lesdits compteurs électriques intelligents sont respectivement en charge de relever la consommation énergétique. On peut ainsi noter que la présente invention est particulièrement adaptée à être implémentée dans des réseaux de communication par courants porteurs en ligne selon la technologie G3-PLC.

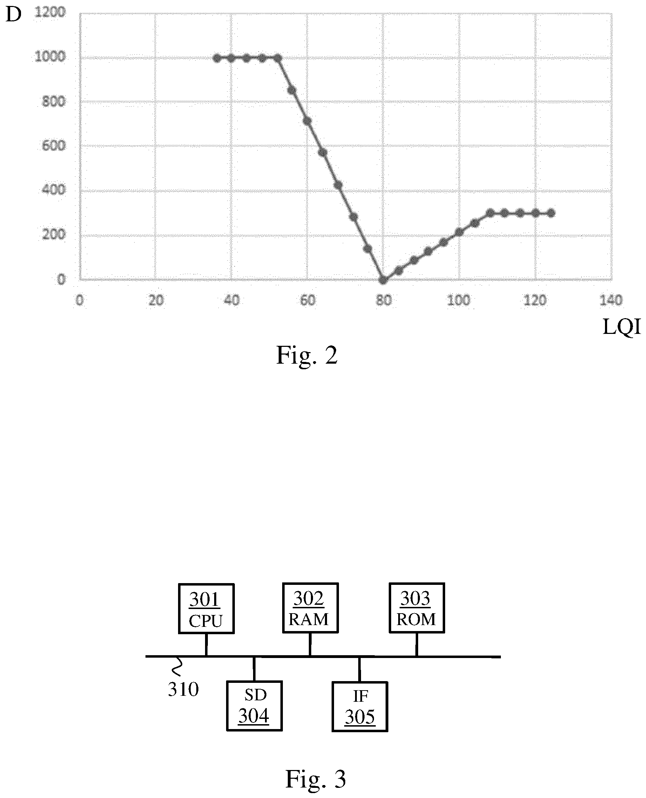

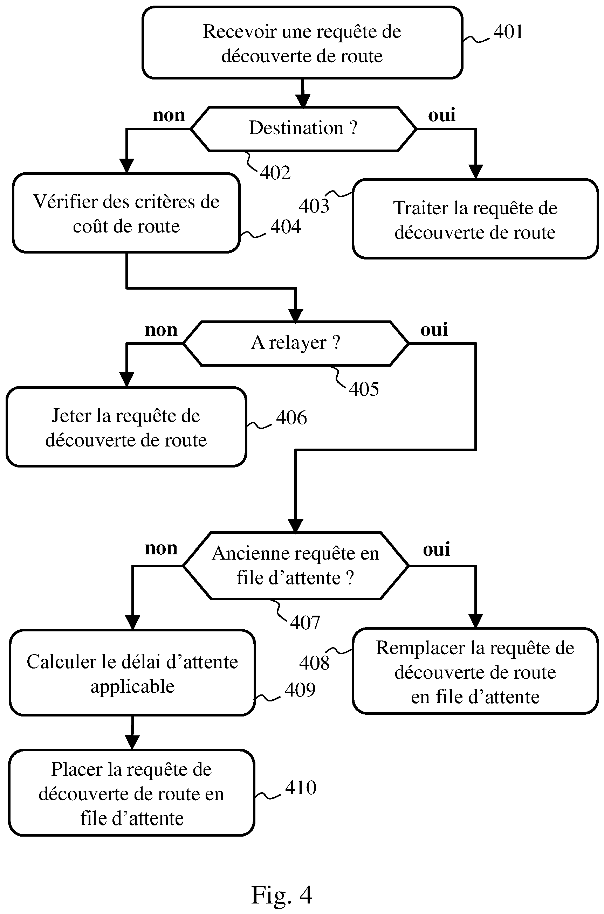

Comme détaillé ci-après en relation avec les Figs. 3 et 4, afin d'éviter des phénomènes de collision lors d'un relais d'une requête de découverte de route, chaque dispositif nœud du réseau de communication maillé 120 applique, avant relais, un délai d'attente avant de tenter d'accéder au medium de communication pour diffuser ladite requête de découverte de route. Ce délai d'attente est plus particulièrement utilisé dans le cadre d'un mécanisme CSMA/CA. Ce délai d'attente fait office de gigue contrôlée, et est préférentiellement introduit entre le moment où le dispositif nœud considéré détecte qu'une requête de découverte de route est à retransmettre (le dispositif nœud considéré n'est pas la destination de la route recherchée, et est donc un intermédiaire sur la route) et le moment où la requête de découverte de route à retransmettre est confiée à la couche liaison (aussi appelée couche MAC (« Medium Access Control » en anglais)) et notamment au mécanisme d'évitement de collision CSMA/CA.

Au moins un dispositif nœud du réseau de communication maillé 120 détermine le délai d'attente applicable à une requête de découverte de route à relayer en fonction d'un indicateur de qualité de lien LQI (« Link Quality Indicator » en anglais) avec le dispositif nœud précédent sur la route suivie jusqu'alors par ladite requête de découverte de route. L'indicateur de qualité de lien LQI est une métrique de qualité actuelle de signal reçu. L'indicateur de qualité de lien LQI fournit une estimation de facilité avec laquelle un signal reçu peut être démodulé en accumulant la magnitude de l'erreur entre les constellations idéales de la modulation appliquée et un ensemble de symboles du signal reçu. En considérant deux valeurs d'indicateur de qualité de lien LQI, la moins élevée des deux indique une plus faible qualité de lien. L'indicateur de qualité de lien LQI est préférable à un indicateur d'intensité de signal reçu RSSI (« Received Signal Strength Indicator » en anglais) puisque, contrairement à l'indicateur d'intensité de signal reçu RSSI, la valeur de l'indicateur de qualité de lien LQI dépend du schéma de modulation utilisé. Cependant, les comportements et étapes décrits ici en lien avec l'indicateur de qualité de lien LQI sont applicables avec l'indicateur d'intensité de signal reçu RSSI, ou avec une combinaison de l'indicateur de qualité de lien LQI et l'indicateur d'intensité de signal reçu RSSI. D'une manière générale, le délai d'attente applicable à une requête de découverte de route à relayer est déterminé en fonction d'un niveau de qualité du lien via lequel ladite requête de découverte de route a été reçue.

A noter que sur les réseaux de communication maillé par courants porteurs en ligne conformes aux spécifications G3-PLC, l'indicateur de qualité de lien LQI est un nombre sans unité qui retranscrit un rapport signal bruit SNR (« Signal-to-Noise Ratio » en anglais), exprimé en décibels (dB), sur une échelle différente (allant typiquement de 0 à 255). La règle de correspondance est alors la suivante : $LQI=(SNR+10)/4$. Bien que l'échelle théorique soit typiquement de 0 à 255, la plage de 40 (trame pratiquement indétectable) à 120 (trame considérée comme parfaitement reçue) est en pratique employée. Il est donc en pratique considéré qu'en dehors de cette plage, les valeurs d'indicateur de qualité de lien LQI n'apportent pas d'information supplémentaire pertinente concernant la qualité de lien. Dans d'autres réseaux de communication maillés, l'indicateur de qualité de lien LQI peut évoluer dans une plage de valeurs différente.

A noter aussi que l'indicateur de qualité de lien LQI et l'indicateur d'intensité de signal reçu RSSI sont deux métriques fournies par de nombreux composants (« chips » en anglais) d'interface physique.

Plus précisément, le délai d'attente applicable à une requête de découverte de route à relayer est déterminé de la manière suivante :

- lorsque l'indicateur de qualité de lien LQI (ou plus généralement le niveau de qualité de lien) est inférieur ou égal à un premier seuil prédéfini adpLowLQIValue, le délai d'attente est égal à une première valeur par défaut adpDelayLowLQI ;

- lorsque l'indicateur de qualité de lien LQI (ou plus généralement le niveau de qualité de lien) est supérieur ou égal à un second seuil prédéfini adpHighLQIValue, le délai d'attente est égal à une seconde valeur par défaut adpDelayHighLQI, le second seuil prédéfini adpHighLQIValue étant strictement supérieur au premier seuil prédéfini adpLowLQIValue ; et

- lorsque l'indicateur de qualité de lien LQI (ou plus généralement le niveau de qualité de lien) est compris dans l'intervalle entre le premier seuil prédéfini adpLowLQIValue et le second seuil prédéfini adpHighLQIValue, le délai d'attente est inférieur à la première valeur par défaut adpDelayLowLQI, et pour au moins une partie de l'intervalle entre le premier seuil prédéfini adpLowLQIValue et le second seuil prédéfini adpHighLQIValue, le délai d'attente est aussi inférieur à la seconde valeur par défaut adpDelayHighLQI.

Dans un mode de réalisation particulier, la seconde valeur par défaut adpDelayHighLQI est inférieure ou égale à la première valeur par défaut adpDelayLowLQI.

Ainsi, en appliquant un délai d'attente tel que défini ci-dessus, la priorité n'est pas donnée aux liens de qualité jugée trop faible (inférieure ou égale au premier seuil prédéfini adpLowLQIValue), car pour ces liens, une modulation robuste doit être utilisée et il y a un fort risque de perte de trames si la qualité du lien se dégrade encore un peu, ce qui implique que les routes empruntant de tels liens ont une faible probabilité d'être retenues. De plus, la priorité n'est pas donnée aux liens de qualité jugée trop forte (supérieure ou égale au second seuil prédéfini adpHighLQIValue), car les routes empruntant de tels liens ont une forte probabilité de contenir un plus grand nombre de sauts (« hops » en anglais) que d'autres routes alternatives. En effet, une forte qualité de lien (supérieure ou égale au second seuil prédéfini adpHighLQIValue) suggère que les dispositifs nœuds concernés sont proches l'un de l'autre, ce qui implique que le signal n'a transité que sur une faible distance, et donc les routes empruntant de tels liens ont une assez faible probabilité d'être retenues. Il est donc préférable de favoriser des liens de qualité jugée moyenne, c'est-à-dire ceux présentant un bon compromis entre risque de perte ultérieure de trames d'un côté, et latence de route et consommation de bande passante d'un autre côté.

Il s'agit bien ici d'établir des priorités de relais grâce à la variabilité du délai d'attente, pas d'éliminer les requêtes de découverte de route en provenance de liens de qualité jugée trop faible (inférieure ou égale au premier seuil prédéfini adpLowLQIValue) ou trop forte (supérieure ou égale au second seuil prédéfini adpHighLQIValue). Si les routes disponibles ne correspondent qu'à des critères que l'on veut éviter, une route peut tout de même être établie.

Un exemple est présenté sur la **Fig. 2,** pour lequel le premier seuil prédéfini adpLowLQIValue est fixé à 52, le second seuil prédéfini adpHighLQIValue est fixé à 108, la première valeur par défaut adpDelayLowLQI est fixée à 1000 millisecondes (ms) et la seconde valeur par défaut adpDelayHighLQI est fixée à 300 millisecondes (ms).

Dans l'exemple de réalisation particulier de la Fig. 2, une valeur optimale d'indicateur de qualité de lien LQI est fixée à la valeur moyenne entre le premier seuil prédéfini adpLowLQIValue et le second seuil prédéfini adpHighLQIValue, c'est-à-dire la moitié de la somme du premier seuil prédéfini adpLowLQIValue et du second seuil prédéfini adpHighLQIValue, soit 80 pour l'exemple de la Fig. 2. Pour cette valeur optimale, le délai d'attente présente un minima. Dans un mode de réalisation particulier, lorsque l'indicateur de qualité de lien LQI est égal à cette valeur optimale, le délai d'attente appliqué est nul.

Dans un mode de réalisation particulier, le délai d'attente applicable évolue de manière linéaire (comme illustré sur la Fig. 2) entre le premier seuil prédéfini adpLowLQIValue et la valeur optimale d'indicateur de qualité de lien LQI.

Dans un mode de réalisation particulier, le délai d'attente applicable évolue de manière linéaire (comme illustré sur la Fig. 2) entre la valeur optimale d'indicateur de qualité de lien LQI et le second seuil prédéfini adpHighLQIValue.

Ainsi, dans un mode de réalisation particulier, cela donne un système de deux équations linéaires qui a pour solution :

- entre le premier seuil prédéfini adpLowLQIValue et la valeur optimale de qualité de lien LQI

$$\frac{(\text{adpLowLQIValue} + \text{adpHighLQIValue})}{2}$$ , le délai d'attente applicable D est défini comme suit

$$D = LQI \times 2 \times \frac{adpDelayLowLQI}{adpLowLQIValue - adpHighLQIValue} +$$

$$adpDelayLowLQI \times \frac{\frac{adpLowLQIValue + adpHighLQIValue}{adpHighLQIValue - adpLowLQIValue}}{}$$

- entre la valeur optimale de qualité de lien LQI $\frac{(adpLowLQIValue + adpHighLQIValue)}{2}$ et le second seuil prédéfini adpHighLQIValue, le délai d'attente applicable D est défini comme suit

$$D = LQI \times 2 \times \frac{adpDelayHighLQI}{adpHighLQIValue - adpLowLQIValue} +$$

$$adpDelayHighLQI \times \frac{adpLowLQIValue + adpHighLQIValue}{adpLowLQIValue - adpHighLQIValue}$$

Dans un mode de réalisation particulier, la requête de découverte de route inclut une information indiquant si le chemin parcouru jusqu'alors par ladite requête de découverte de route inclut un ou plusieurs liens jugés non fiables, c'est-à-dire dont l'indicateur de qualité de lien LQI est inférieur ou égal à un troisième seuil adpWeakLQIValue, notamment défini dans les spécifications G3-PLC. Le troisième seuil adpWeakLQIValue est fixé à une valeur inférieure au premier seuil prédéfini adpLowLQIValue. Ladite information est préférentiellement un compteur de liens jugés non fiables, appelé weak_link_count. Lorsqu'un dispositif nœud reçoit une dite requête de découverte de route, le dispositif nœud en question compare l'indicateur de qualité de lien LQI associé à ladite requête de découverte de route avec le troisième seuil adpWeakLQIValue, et, en conséquence, met au besoin à jour l'information indiquant si le chemin parcouru jusqu'alors par ladite requête de découverte de route inclut un ou plusieurs liens jugés non fiables (typiquement incrémente d'une unité le compteur weak_link_count lorsque l'indicateur de qualité de lien LQI est inférieur ou égal au troisième seuil adpWeakLQIValue). Ainsi, lorsque la requête de découverte de route a suivi un chemin incluant un ou plusieurs liens jugés non fiables, le délai d'attente applicable à ladite requête de découverte de route est augmenté d'un délai d'attente supplémentaire prédéfini adpDelayWeakLink. Selon un premier mode de réalisation particulier, ce délai d'attente supplémentaire prédéfini adpDelayWeakLink est fixe, par exemple à une troisième valeur par défaut égale à 500 millisecondes (ms). Selon un second mode de réalisation particulier, ce délai d'attente supplémentaire prédéfini adpDelayWeakLink dépend de la valeur du compteur weak_link_count : plus le compteur weak_link_count est élevé, plus le délai d'attente supplémentaire prédéfini adpDelayWeakLink est grand.

Dans un mode réalisation particulier, durant le délai d'attente appliqué à une requête de découverte de route à propager, lorsque le dispositif nœud considéré reçoit une autre requête de découverte de route avec les mêmes source et destination et lorsqu'en outre cette autre requête de découverte de route présente un meilleur coût de route, le dispositif nœud remplace en file d'attente l'ancienne requête de découverte de route (celle qui était déjà en attente) par cette autre requête de découverte de route. Cela permet d'éviter aux dispositifs nœuds en aval de recevoir deux requêtes de découverte de route consécutives pour la même route, ce qui permet des économies de bande passante et de ressources de traitement au niveau des dispositifs nœuds en aval. Dans un mode de réalisation particulier, le délai d'attente n'est pas recalculé, et cette autre requête de découverte de route est mise en attente pour le temps restant du délai d'attente qui était appliqué à l'ancienne requête de découverte de route.

La **Fig. 3** illustre schématiquement un exemple d'architecture matérielle applicable à chaque dispositif nœud du réseau de communication maillé 120.

Le dispositif nœud comporte, reliés par un bus de communication 310 : un processeur ou CPU (« Central Processing Unit » en anglais) 301 ; une mémoire vive RAM (« Random Access Memory » en anglais) 302 ; une mémoire morte ROM (« Read Only Memory » en anglais) 303 ou une mémoire Flash ; une unité de stockage ou un lecteur de support de stockage, tel qu'un lecteur de cartes SD (« Secure Digital » en anglais) 304 ou un disque dur HDD (« Hard Disk Drive » en anglais) ; au moins une interface de communication IF 305. Dans un mode de réalisation particulier, l'interface de communication IF 305 est une interface de communication par courants porteurs en ligne.

Le processeur 301 est capable d'exécuter des instructions chargées dans la mémoire RAM 302 à partir de la mémoire ROM 303 ou de la mémoire Flash, d'une mémoire externe, d'un support de stockage, ou d'un réseau de communication (potentiellement autre que le réseau de communication maillé 120). Lorsque le dispositif nœud est mis sous tension, le processeur 301 est capable de lire de la mémoire RAM 302 des instructions et de les exécuter. Ces instructions forment un programme d'ordinateur causant la mise en œuvre, par le processeur 301, de tout ou partie de l'algorithme, des étapes et des comportements décrits ici.

Ainsi, tout ou partie de l'algorithmes, des étapes et des comportements décrits ici peut être implémenté sous forme logicielle par exécution d'un ensemble d'instructions par une machine programmable, telle qu'un DSP (« Digital Signal Processor » en anglais) ou un microcontrôleur. Tout ou partie de l'algorithme, des étapes et des comportements décrits ici peut aussi être implémenté sous forme matérielle par une machine dédiée ou un ensemble de composants (« chipset » en anglais) dédié ou un composant (« chip » en anglais) dédié, tel qu'un FPGA (« Field-Programmable Gâte Array » en anglais) ou un ASIC (« Application-Specific Integrated Circuit » en anglais). D'une manière générale, le dispositif nœud comporte de la circuiterie électronique adaptée et configurée pour implémenter l'algorithme, les étapes et les comportements décrits ici.

La **Fig. 4** illustre schématiquement un algorithme de relais de requête de découverte de route. L'algorithme de la Fig. 4 est implémenté par au moins un dispositif nœud du réseau de communication maillé 120. L'algorithme de la Fig. 4 est préférentiellement implémenté par chaque dispositif nœud du réseau de communication maillé 120.

Dans une étape 401, ledit dispositif nœud reçoit une requête de découverte de route.

Dans une étape 402, ledit dispositif nœud vérifie si ledit dispositif nœud est la destination de la requête de découverte de route, c'est-à-dire si ledit dispositif nœud est la destination de la route à découvrir. Si tel est le cas, une étape 403 est effectuée ; sinon, une étape 404 est effectuée.

Dans l'étape 403, ledit dispositif nœud traite la requête de découverte de route dans le cadre de la sélection de la route qui présente le moindre coût de route parmi les routes découvertes. Il alors mis fin à l'algorithme de la Fig. 4.

Dans l'étape 404, ledit dispositif nœud vérifie si la requête de découverte de route respecte les critères de coût de route qui définissent si ladite requête de découverte de route doit être relayée. D'autres critères que les critères de coût de route peuvent être appliqués. Par exemple, les critères en question sont par exemple ceux énoncés dans la table 9-37 de la clause D.11.2 des spécifications G3-PLC.

Dans une étape 405, ledit dispositif nœud vérifie si la requête de découverte de route doit être relayée selon lesdits critères. Si tel n'est pas le cas, une étape 406 est effectuée ; sinon, une étape 407 est effectuée.

Dans l'étape 406, ledit dispositif nœud jette la requête de découverte de route reçue à l'étape 401. En effet, une requête de découverte de route présentant un meilleur coût de route a déjà précédemment été traitée. Il alors mis fin à l'algorithme de la Fig. 4.

Dans l'étape 407, optionnelle, ledit dispositif nœud vérifie si une autre requête de découverte de route, concernant le même couple source-destination, est présente en file d'attente. En d'autres termes, ledit dispositif nœud vérifie si un délai d'attente est en cours pour une autre requête de découverte de route (ancienne requête de découverte de route) concernant le même couple source-destination. Si tel n'est pas le cas, une étape 408 est effectuée ; sinon, une étape 409 est effectuée. Dans le cas où l'étape 407 n'est pas implémentée, l'étape 409 est directement effectuée.

Dans l'étape 408, ledit dispositif nœud remplace en file d'attente l'ancienne requête de découverte de route par celle reçue à l'étape 401. Le délai d'attente calculé pour l'ancienne requête de découverte de route reste applicable, et la diffusion de la requête de découverte de route par celle reçue à l'étape 401 patiente jusqu'à expiration du temps restant du délai d'attente calculé pour l'ancienne requête de découverte de route.

Dans l'étape 409, ledit dispositif nœud calcule le délai d'attente applicable pour la requête de découverte de route. Le délai d'attente applicable dépend du niveau de qualité du lien via lequel ledit dispositif nœud a reçu ladite requête de découverte de route (i.e., le lien entre ledit dispositif nœud et le précédent dispositif nœud sur la route suivie jusqu'alors par la requête de découverte de route en question). Comme déjà indiqué, le niveau de qualité du lien est préférentiellement l'indicateur de qualité de lien LQI, mais peut être l'indicateur d'intensité de signal reçu RSSI, ou une combinaison des deux.

Dans l'étape 410, ledit dispositif nœud place la requête de découverte de route dans une file d'attente avant que ladite requête de découverte de route puisse effectivement être relayée, c'est-à-dire jusqu'à expiration du délai d'attente calculé à l'étape 409.

Ainsi, lorsque le délai d'attente est écoulé, le dispositif nœud diffuse la requête de découverte de route de manière à ce que le réseau de communication maillé puisse tenter de faire progresser ladite requête de découverte de route jusqu'à sa destination, à moins qu'elle n'ait été remplacée pendant le délai d'attente par une autre requête de découverte de route présentant un meilleur coût de route.

## Revendications

1. Procédé pour relayer une requête de découverte de route afin de découvrir au moins une route depuis un dispositif nœud source (133) jusqu'à un dispositif nœud destination (136) dans un réseau de communication maillé (120) comportant en outre d'autres dispositifs nœuds (130, 131, 132, 134, 135, 137, 138, 139) pouvant agir comme relais entre le dispositif nœud source et le dispositif nœud destination, le procédé étant implémenté par au moins un dispositif nœud (134) parmi lesdits autres dispositifs nœuds (130, 131, 132, 134, 135, 137, 138, 139) et comportant les étapes suivantes :

- recevoir (401) la requête de découverte de route à relayer, la requête de découverte de route étant reçue via un lien présentant un niveau de qualité de lien,
- déterminer (409) un délai d'attente à appliquer avant de relayer la requête de découverte de route,
- appliquer (410) le délai d'attente à la requête de découverte de route, et
- relayer la requête de découverte de route après expiration du délai d'attente,

**caractérisé en ce que** le délai d'attente est déterminé de la façon suivante :

- lorsque le niveau de qualité de lien est inférieur ou égal à un premier seuil prédéfini, le délai d'attente est égal à une première valeur par défaut ;
- lorsque le niveau de qualité de lien est supérieur ou égal à un second seuil prédéfini, le délai d'attente est égal à une seconde valeur par défaut, la seconde valeur par défaut étant inférieure ou égale à la première valeur par défaut, le second seuil prédéfini étant strictement supérieur au premier seuil prédéfini ; et
- lorsque le niveau de qualité de lien est compris dans l'intervalle entre le premier seuil prédéfini et le second seuil prédéfini, le délai d'attente est inférieur à la première valeur par défaut, et pour au moins une partie de l'intervalle entre le premier seuil prédéfini et le second seuil prédéfini, le délai d'attente est aussi inférieur à la seconde valeur par défaut.

2. Procédé selon la revendication 1, dans lequel le niveau de qualité de lien est un indicateur de qualité de lien LQI.

3. Procédé selon l'une des revendications 1 et 2, dans lequel lorsque le niveau de qualité de lien est égal à une valeur prédéfinie, appelée valeur optimale, entre le premier seuil prédéfini et second seuil prédéfini, le délai d'attente est minimal.

4. Procédé selon la revendication 3, dans lequel le délai d'attente minimal est nul.

5. Procédé selon l'une des revendications 3 et 4, dans lequel le délai d'attente évolue de manière linéaire entre le premier seuil prédéfini et la valeur optimale.

6. Procédé selon l'une quelconque des revendications 3 à 5, dans lequel le délai d'attente évolue de manière linéaire entre la valeur optimale et le second seuil prédéfini.

7. Procédé selon les revendications 5 et 6, dans lequel :

- entre le premier seuil prédéfini et la valeur optimale de qualité de lien LQI $\dfrac{(\text{adpLowLQIValue}+\text{adpHighLQIValue})}{2}$, le délai d'attente applicable D est défini comme suit

$$D = \text{LQI} \times 2 \times \frac{\text{adpDelayLowLQI}}{\text{adpLowLQIValue} - \text{adpHighLQIValue}} +$$

$$\text{adpDelayLowLQI} \times \frac{\text{adpLowLQIValue} + \text{adpHighLQIValue}}{\text{adpHighLQIValue} - \text{adpLowLQIValue}}$$

- et entre la valeur optimale de qualité de lien LQI $\dfrac{(\text{adpLowLQIValue}+\text{adpHighLQIValue})}{2}$ et le second seuil prédéfini, le délai d'attente applicable D est défini comme suit

$$D = LQI \times 2 \times \frac{adpDelayHighLQI}{adpHighLQIValue - adpLowLQIValue} +$$

$$adpDelayHighLQI \times \frac{adpLowLQIValue + adpHighLQIValue}{adpLowLQIValue - adpHighLQIValue}$$

où adpLowLQIValue représente le premier seuil prédéfini, adpHighLQIValue représente le second seuil prédéfini, adpLowLQIValue représente la première valeur par défaut et adpHighLQIValue représente la seconde valeur par défaut, et où le niveau de qualité de lien est un indicateur de qualité de lien LQI.

8. Procédé selon l'une quelconque des revendications 1 à 7, dans lequel la requête de découverte de route inclut une information indiquant si le chemin parcouru jusqu'alors par ladite requête de découverte de route inclut un ou plusieurs liens jugés non fiables, le procédé comporte en outre les étapes suivantes :

   - comparer le niveau de qualité de lien avec un troisième seuil, et en conséquence, mettre au besoin à jour l'information indiquant si le chemin parcouru jusqu'alors par ladite requête de découverte de route inclut un ou plusieurs liens jugés non fiables ; et
   - lorsque ledit chemin inclut un ou plusieurs liens jugés non fiables, augmenter le délai d'attente par un délai d'attente supplémentaire prédéfini.

9. Procédé selon l'une quelconque des revendications 1 à 8, dans lequel lorsqu'une autre requête de découverte de route est reçue avec les mêmes dispositif nœud source et dispositif nœud destination durant le délai d'attente appliqué à la requête de découverte de route à relayer et lorsqu'en outre cette autre requête de découverte de route présente un meilleur coût de route, le procédé comporte l'étape suivante :

   - remplacer en file d'attente la requête de découverte de route déjà en attente par ladite autre requête de découverte de route.

10. Procédé selon la revendication 9, dans lequel cette autre requête de découverte de route est mise en attente pour le temps restant du délai d'attente qui était appliqué à la requête de découverte de route précédemment présente en file d'attente.

11. Procédé de relais de requêtes de découverte de route dans un réseau de communication maillé (120) comportant en outre des dispositifs nœuds (130, 131, 132, 133, 134, 135, 136, 137, 138, 139), chaque dispositif nœud implémentant le procédé selon l'une quelconque des revendications 1 à 10.

12. Produit programme d'ordinateur comportant des instructions entraînant l'exécution du procédé selon l'une quelconque des revendications 1 à 10, lorsque lesdites instructions sont exécutées par un processeur.

13. Support de stockage d'informations stockant un programme d'ordinateur selon la revendication 12.

14. Dispositif nœud, appelé dispositif nœud intermédiaire, configuré pour relayer une requête de découverte de route afin de découvrir au moins une route depuis un dispositif nœud source (133) jusqu'à un dispositif nœud destination (136) dans un réseau de communication maillé (120) dans lequel le dispositif nœud intermédiaire est destiné à être utilisé, le dispositif nœud (134) comportant :

   - des moyens pour recevoir (401) la requête de découverte de route à relayer, la requête de découverte de route étant reçue via un lien présentant un niveau de qualité de lien,
   - des moyens pour déterminer (409) un délai d'attente à appliquer avant de relayer la requête de découverte de route,
   - des moyens pour appliquer (410) le délai d'attente à la requête de découverte de route, et
   - des moyens pour relayer la requête de découverte de route après expiration du délai d'attente, **caractérisé en ce que** le délai d'attente est déterminé de la façon suivante :
   - lorsque le niveau de qualité de lien est inférieur ou égal à un premier seuil prédéfini, le délai d'attente est égal à une première valeur par défaut ;

- lorsque le niveau de qualité de lien est supérieur ou égal à un second seuil prédéfini, le délai d'attente est égal à une seconde valeur par défaut, la seconde valeur par défaut étant inférieure ou égale à la première valeur par défaut, le second seuil prédéfini étant strictement supérieur au premier seuil prédéfini ; et

- lorsque le niveau de qualité de lien est compris dans l'intervalle entre le premier seuil prédéfini et le second seuil prédéfini, le délai d'attente est inférieur à la première valeur par défaut, et pour au moins une partie de l'intervalle entre le premier seuil prédéfini et le second seuil prédéfini, le délai d'attente est aussi inférieur à la seconde valeur par défaut.

**15.** Compteur électrique intelligent incluant le dispositif nœud selon la revendication 14.

**16.** Réseau de communication maillé (120) comportant une pluralité de dispositifs nœuds selon la revendication 14.

**17.** Réseau de communication maillé (120) implémenté sur un réseau d'alimentation électrique, où le réseau de communication maillé (120) est un réseau de communication par courants porteurs en ligne comportant une pluralité de compteurs électriques intelligents selon la revendication 15.

**Patentansprüche**

**1.** Verfahren zur Weiterleitung einer Weg-Ermittlungsanfrage, um mindestens einen Weg von einer Quellknotenvorrichtung (133) zu einer Zielknotenvorrichtung (136) in einem Maschen-Kommunikationsnetz (120) zu ermitteln, das außerdem andere Knotenvorrichtungen (130, 131, 132, 134, 135, 137, 138, 139) umfasst, die als Vermittler zwischen der Quellknotenvorrichtung und der Zielknotenvorrichtung agieren können, wobei das Verfahren durch mindestens eine Knotenvorrichtung (134) unter den anderen Knotenvorrichtungen (130, 131, 132, 134, 135, 137, 138, 139) umgesetzt wird und die folgenden Schritte umfasst:

- Empfangen (401) der zu vermittelnden Weg-Ermittlungsanfrage, wobei die Weg-Ermittlungsanfrage über eine Verbindung empfangen wird, die ein Verbindungsqualitätsniveau aufweist,
- Bestimmen (409) einer anzuwendenden Warteverzögerung vor dem Vermitteln der Weg-Ermittlungsanfrage,
- Anwenden (410) der Warteverzögerung auf die Weg-Ermittlungsanfrage und
- Vermitteln der Weg-Ermittlungsanfrage nach Ablauf der Warteverzögerung, **dadurch gekennzeichnet, dass** die Warteverzögerung folgendermaßen bestimmt wird:
- wenn das Verbindungsqualitätsniveau kleiner oder gleich einem vordefinierten ersten Schwellenwert ist, ist die Warteverzögerung gleich einem ersten Standardwert;
- wenn das Verbindungsqualitätsniveau größer oder gleich einem vordefinierten zweiten Schwellenwert ist, ist die Warteverzögerung gleich einem zweiten Standardwert, wobei der zweite Standardwert kleiner oder gleich dem ersten Standardwert ist, wobei der vordefinierte zweite Schwellenwert unbedingt größer als der vordefinierte erste Schwellenwert ist; und
- wenn das Verbindungsqualitätsniveau im Intervall zwischen dem vordefinierten ersten Schwellenwert und dem vordefinierten zweiten Schwellenwert liegt, ist die Warteverzögerung kleiner als der erste Standardwert und für mindestens einen Teil des Intervalls zwischen dem vordefinierten ersten Schwellenwert und dem vordefinierten zweiten Schwellenwert ist die Warteverzögerung auch kleiner als der zweite Standardwert.

**2.** Verfahren nach Anspruch 1, wobei das Verbindungsqualitätsniveau eine Verbindungsqualitätsanzeige LQI ist.

**3.** Verfahren nach einem der Ansprüche 1 und 2, wobei die Warteverzögerung minimal ist, wenn das Verbindungsqualitätsniveau gleich einem vordefinierten Wert, Optimalwert genannt, zwischen dem vordefinierten ersten Schwellenwert und dem vordefinierten zweiten Schwellenwert ist.

**4.** Verfahren nach Anspruch 3, wobei die Warteverzögerung null ist.

**5.** Verfahren nach einem der Ansprüche 3 und 4, wobei sich die Warteverzögerung linear zwischen dem vordefinierten ersten Schwellenwert und dem Optimalwert entwickelt.

**6.** Verfahren nach einem der Ansprüche 3 bis 5, wobei sich die Warteverzögerung linear zwischen dem Optimalwert und dem vordefinierten zweiten Schwellenwert entwickelt.

**7.** Verfahren nach den Ansprüchen 5 und 6, wobei:

- zwischen dem vordefinierten ersten Schwellenwert und dem Optimalwert der Verbindungsqualität $LQI \frac{(adpLowLQIValue + adpHighLQIValue)}{2}$ die anwendbare Warteverzögerung D wie folgt definiert ist

$$D = LQI \times 2 \times \frac{adpDelayLowLQI}{adpLowLQIValue - adpHighLQIValue} + adapDelayLowLQI \times \frac{adpLowLQIValue + adpHighLQIValue}{adpHighLQIValue - adpLowLQIValue}$$

- und zwischen dem Optimalwert der Verbindungsqualität LQI $\frac{(adpLowLQIValue + adpHighLQIValue)}{2}$ und dem vordefinierten zweiten Schwellenwert die anwendbare Warteverzögerung D wie folgt definiert ist

$$D = LQI \times 2 \times \frac{adpDelayHighLQI}{adpHighLQIValue - adpLowLQIValue} + adapDelayHighLQI \times \frac{adpLowLQIValue + adpHighLQIValue}{adpLowLQIValue - adpHighLQIValue}$$

wobei adpLowLQIValue den vordefinierten ersten Schwellenwert darstellt, adpHighLQIValue den vordefinierten zweiten Schwellenwert darstellt, adpLowLQIValue den ersten Standardwert darstellt und adpHighLQIValue den zweiten Standardwert darstellt und wobei das Verbindungsqualitätsniveau eine Verbindungsqualitätsanzeige LQI ist.

8. Verfahren nach einem der Ansprüche 1 bis 7, wobei die Weg-Ermittlungsanfrage eine Information enthält, die angibt, ob der Weg, der bisher von der Weg-Ermittlungsanfrage durchlaufen wurde, eine oder mehrere Verbindungen enthält, die als nicht zuverlässig angesehen werden, und das Verfahren außerdem die folgenden Schritte umfasst:

   - Vergleichen des Verbindungsqualitätsniveaus mit einem dritten Schwellenwert und folglich bei Bedarf Aktualisieren der Information, die angibt, ob der Weg, der bisher von der Weg-Ermittlungsanfrage durchlaufen wurde, eine oder mehrere Verbindungen enthält, die als nicht zuverlässig angesehen werden; und
   - wenn der Weg eine oder mehrere Verbindungen enthält, die als nicht zuverlässig angesehen werden, Erhöhen der Warteverzögerung durch eine vordefinierte zusätzliche Warteverzögerung.

9. Verfahren nach einem der Ansprüche 1 bis 8, wobei, wenn eine andere Weg-Ermittlungsanfrage mit derselben Quellknotenvorrichtung und Zielknotenvorrichtung während der Warteverzögerung empfangen wird, die auf die zu vermittelnde Weg-Ermittlungsanfrage angewandt wird, und wenn außerdem diese Weg-Ermittlungsanfrage bessere Wegkosten aufweist, das Verfahren den folgenden Schritt umfasst:

   - Ersetzen der bereits wartenden Weg-Ermittlungsanfrage in der Warteschlange durch die andere Weg-Ermittlungsanfrage.

10. Verfahren nach Anspruch 9, wobei diese andere Weg-Ermittlungsanfrage für die verbleibende Zeit der Warteverzögerung, die auf die zuvor in der Warteschlange vorhandene Weg-Ermittlungsanfrage angewandt wurde, in Wartestellung versetzt wird.

11. Verfahren zur Vermittlung von Weg-Ermittlungsanfragen in einem Maschen-Kommunikationsnetz (120), das außerdem Knotenvorrichtungen (130, 131, 132, 133, 134, 135, 136, 137, 138, 139) umfasst, wobei jede Knotenvorrichtung das Verfahren nach einem der Ansprüche 1 bis 10 umsetzt.

12. Computerprogrammprodukt, das Anweisungen umfasst, die die Ausführung des Verfahrens nach einem der Ansprüche 1 bis 10 bewirken, wenn die Anweisungen durch einen Prozessor ausgeführt werden.

13. Informationsspeichermedium, das ein Computerprogrammprodukt nach Anspruch 12 speichert.

14. Knotenvorrichtung, Zwischenknotenvorrichtung genannt, die dazu konfiguriert ist, eine Weg-Ermittlungsanfrage zu vermitteln, um mindestens einen Weg von einer Quellknotenvorrichtung (133) zu einer Zielknotenvorrichtung (136) in einem Maschinen-Kommunikationsnetz (120) zu ermitteln, wobei die Zwischenknotenvorrichtung zur Nutzung bestimmt ist, wobei die Zwischenknotenvorrichtung (134) umfasst:

- Mittel zum Empfangen (401) der zu vermittelnden Weg-Ermittlungsanfrage, wobei die Weg-Ermittlungsanfrage über eine Verbindung empfangen wird, die ein Verbindungsqualitätsniveau aufweist,
- Mittel zum Bestimmen (409) einer anzuwendenden Warteverzögerung vor dem Vermitteln der Weg-Ermittlungsanfrage,
- Mittel zum Anwenden (410) der Warteverzögerung auf die Weg-Ermittlungsanfrage und
- Mittel zum Vermitteln der Weg-Ermittlungsanfrage nach Ablauf der Warteverzögerung,

**dadurch gekennzeichnet, dass** die Warteverzögerung folgendermaßen bestimmt wird:

- wenn das Verbindungsqualitätsniveau kleiner oder gleich einem vordefinierten ersten Schwellenwert ist, ist die Warteverzögerung gleich einem ersten Standardwert;
- wenn das Verbindungsqualitätsniveau größer oder gleich einem vordefinierten zweiten Schwellenwert ist, ist die Warteverzögerung gleich einem zweiten Standardwert, wobei der zweite Standardwert kleiner oder gleich dem ersten Standardwert ist, wobei der vordefinierte zweite Schwellenwert unbedingt größer als der vordefinierte erste Schwellenwert ist; und
- wenn das Verbindungsqualitätsniveau im Intervall zwischen dem vordefinierten ersten Schwellenwert und dem vordefinierten zweiten Schwellenwert liegt, ist die Warteverzögerung kleiner als der erste Standardwert und für mindestens einen Teil des Intervalls zwischen dem vordefinierten ersten Schwellenwert und dem vordefinierten zweiten Schwellenwert ist die Warteverzögerung auch kleiner als der zweite Standardwert.

15. Intelligenter elektrischer Zähler, der die Knotenvorrichtung nach Anspruch 14 enthält.

16. Maschen-Kommunikationsnetz (120), das eine Vielzahl von Knotenvorrichtungen nach Anspruch 14 umfasst.

17. Maschen-Kommunikationsnetz (120), das in einem elektrischen Versorgungsnetz implementiert ist, wobei das Maschen-Kommunikationsnetz (120) ein Kommunikationsnetz über leitungsgebundene Trägerströme ist, das eine Vielzahl intelligenter elektrischer Zäher nach Anspruch 15 umfasst.

## Claims

1. Method for relaying a route-discovery request in order to discover at least one route from a source node device (133) to a destination node device (136) in a mesh communication network (120) also comprising other node devices (130, 131, 132, 134, 135, 137, 138, 139) able to act as relays between the source node device and the destination node device, the method being implemented by at least one node device (134) among said other node devices (130, 131, 132, 134, 135, 137, 138, 139) and comprising the following steps:

- receiving (401) the route-discovery request to be relayed, the route-discovery request being received via a link having a link quality level;
- determining (409) a waiting delay to be applied before relaying the route-discovery request;
- applying (410) the waiting delay to the route-discovery request; and
- relaying the route-discovery request after expiry of the waiting delay, **characterised in that** the waiting delay is determined as follows:
- when the link quality level is below or equal to a first predefined threshold, the waiting delay is equal to a first default value;
- when the link quality level is above or equal to a second predefined threshold, the waiting delay is equal to a second default value, the second default value being lower than or equal to the first default value, the second predefined threshold being strictly higher than the first predefined threshold; and,
- when the link quality level lies in the range between the first predefined threshold and the second predefined threshold, the waiting delay is below the first default value and, for at least part of the range between the first predefined threshold and the second predefined threshold, the waiting delay is also below the second default value..

2. Method according to claim 1, wherein the link quality level is a link quality indicator LQI.

3. Method according to one of claims 1 and 2, wherein, when the link quality level is equal to a predefined value, referred to as the optimum value, between the first predefined threshold and second predefined threshold, the waiting delay is at a minimum.

4. Method according to claim 3, wherein the minimum waiting delay is zero.

5. Method according to one of claims 3 and 4, wherein the waiting delay changes linearly between the first predefined threshold and the optimum value.

6. Method according to any one of claims 3 to 5, wherein the waiting delay changes linearly between the optimum value and the second predefined threshold.

7. Method according to claims 5 and 6, wherein

   - between the first predefined threshold and the optimum link quality value LQI $\frac{(\text{adpLowLQIValue} + \text{adpHighLQIValue})}{2}$ , the applicable waiting delay D is defined as follows

$$D = \text{LQI} \times 2 \times \frac{\text{adpDelayLowLQI}}{\text{adpLowLQIValue} - \text{adpHighLQIValue}} +$$

$$\text{adpDelayLowLQI} \times \frac{\text{adpLowLQIValue} + \text{adpHighLQIValue}}{\text{adpHighLQIValue} - \text{adpLowLQIValue}}$$

   - and between the optimum link quality value LQI $\frac{(\text{adpLowLQIValue} + \text{adpHighLQIValue})}{2}$ and the second predefined threshold, the applicable waiting delay D is defined as follows

$$D = \text{LQI} \times 2 \times \frac{\text{adpDelayHighLQI}}{\text{adpHighLQIValue} - \text{adpLowLQIValue}} +$$

$$\text{adpDelayHighLQI} \times \frac{\text{adpLowLQIValue} + \text{adpHighLQIValue}}{\text{adpLowLQIValue} - \text{adpHighLQIValue}}$$

   where adpLowLQIValue represents the first predefined threshold, adpHighLQIValue represents the second predefined threshold, adpLowLQIValue represents the first default value and adpHighLQIValue represents the second default value, and where the link quality level is a link quality indicator LQI.

8. Method according to any one of claims 1 to 7, wherein the route-discovery request includes information indicating whether the path travelled up until then by said route-discovery request includes one or more links judged to be unreliable, the method further comprises the following steps:

   - comparing the link quality level with a third threshold and, consequently, updating as necessary the information indicating whether the path travelled up until then by said route-discover request includes one or more links judged to be unreliable; and,
   - when said path includes one or more links judged to be unreliable, increasing the waiting delay by a predefined additional waiting delay.

9. Method according to any one of claims 1 to 8, wherein, when another route-discovery request is received with the same source node device and destination node device during the waiting delay applied to the route-discovery request to be relayed and when furthermore this other route-discovery request has a better route cost, the method comprises the following step:

- replacing in a queue the route-discovery request already waiting with said other route-discovery request.

10. Method according to claim 9, wherein this other route-discovery request is caused to wait for the remaining time of the waiting delay that was applied to the route-discovery request previously present in a queue.

11. Method for relaying route-discovery requests in a mesh communication network (120) further comprising node devices (130, 131, 132, 133, 134, 135, 137, 138, 139), each node device implementing the method according to any one of claims 1 to 10.

12. Computer program product comprising instructions causing the execution of the method according to any one of claims 1 to 10 when said instructions are executed by a processor.

13. Information storage medium storing a computer program according to claim 12.

14. Node device, referred to as an intermediate node device, configured to relay a route-discovery request in order to discover at least one route from a source node device (133) to a destination node device (136) in a mesh communication network (120) wherein the intermediate node device is intended to be used, the node device (134) comprising:

- means for receiving (401) the route-discovery request to be relayed, the route-discovery request being received via a link having a link quality level;
- means for determining (409) a waiting delay to be applied before relaying the route discovery request;
- means for applying (410) the waiting delay to the route-discovery request; and
- means for relaying the route-discovery request after expiry of the waiting delay, **characterised in that** the waiting delay is determined as follows:
- when the link quality level is below or equal to a first predefined threshold, the waiting delay is equal to a first default value;
- when the link quality level is above or equal to a second predefined threshold, the waiting delay is equal to a second default value, the second default value being lower than or equal to the first default value, the second predefined threshold being strictly higher than the first predefined threshold; and,
- when the link quality level lies in the range between the first predefined threshold and the second predefined threshold, the waiting delay is below the first default value and, for at least part of the range between the first predefined threshold and the second predefined threshold, the waiting delay is also below the second default value.

15. Smart electricity meter including the node device according to claim 14.

16. Mesh communication network (120) comprising a plurality of node devices according to claim 14.

17. Mesh communication network (120) implemented on an electrical supply network, where the mesh communication network (120) is a powerline communication network comprising a plurality of smart electricity meters according to claim 15.

Fig. 1

Fig. 2

Fig. 3

Recevoir une requête de
découverte de route ⟋401

non ⟋ Destination ? ⟍ oui
402

Vérifier des critères de
coût de route ⟋404

403

Traiter la requête de
découverte de route

non ⟋ A relayer ? ⟍ oui
405

Jeter la requête de
découverte de route ⟋406

non ⟋ Ancienne requête en
file d'attente ? ⟍ oui
407

Calculer le délai d'attente
applicable ⟋409

408

Remplacer la requête de
découverte de route
en file d'attente

Placer la requête de
découverte de route en
file d'attente ⟋410

Fig. 4

**EP 3 793 143 B1**

## RÉFÉRENCES CITÉES DANS LA DESCRIPTION

**Documents brevets cités dans la description**

- US 2015271062 A1